# EUROPÄISCHE PATENTSCHRIFT

(11) **EP 3 042 086 B1**
(45) Veröffentlichungstag und Bekanntmachung des Hinweises auf die Patenterteilung: **11.10.2017**
(21) Anmeldenummer: 14752564.6
(22) Anmeldetag: 14.08.2014
(51) Int. Cl.: F15B 13/01

(54) **LASTHALTEVENTIL**
LOAD HOLDING VALVE
VANNE DE MAINTIEN DE CHARGE

(30) Priorität: 04.09.2013 DE 102013014673
(43) Veröffentlichungstag der Anmeldung: 13.07.2016
(73) Patentinhaber: Hydac Fluidtechnik GmbH, 66280 Sulzbach/Saar (DE)
(72) Erfinder: SCHNEIDER, Gerd, 66763 Dillingen (DE); BILL, Markus, 66265 Heusweiler (DE)
(74) Vertreter: Bartels, Martin Erich Arthur
(86) Internationale Anmeldenummer: PCT/EP2014/002253
(87) Internationale Veröffentlichungsnummer: WO 2015/032470

(56) Entgegenhaltungen:
- DE-A1- 10 056 876
- DE-U1- 8 623 832

## Beschreibung

Die Erfindung betrifft ein Lasthalteventil mit den Merkmalen im Oberbegriff von Anspruch 1.

Lasthalteventile dieser Art sind Stand der Technik. In Verbindung mit hydraulischen Verbrauchern in Form lasthebender Arbeitszylinder werden solche Ventile fachsprachlich auch als Senkbremssperr-Ventile bezeichnet. Lasthebende Arbeitszylinder kommen vielfach bei Arbeitsgeräten zum Einsatz, auch in Form von mobilen Geräten wie Baggern, Staplern und dergleichen. Üblicherweise ist in diesen Fällen das Lasthalteventil von einer Bedienungsperson durch manuelle Betätigung einer Steuerventileinrichtung steuerbar. Um hierbei Fehlbedienungen seitens des Personals und dadurch verursachte Gefährdungen sowohl für die Gerätschaften als auch für Personen möglichst auszuschließen, ist dafür Sorge zu tragen, dass sich die Bedienvorgänge für das Personal einfach und übersichtlich gestalten.

Die DE 86 23 832 U1 beschreibt ein Lasthalteventil mit mindestens einem in einem ein- oder mehrteiligen Ventilgehäuse längsverfahrbar geführten Hauptsteuerkolben und einem Rückschlagkolben, wobei in Schaltstellungen in Form einer Lasthaltestellung mittels der beiden Kolben eine fluidführende Verbindung zwischen mindestens zwei Anschlussstellen gesperrt ist, von denen eine der Medienzufuhr oder -abfuhr dient und von denen die andere zu einem hydraulischen Verbraucher führt, einer Lasthebenstellung die beiden Kolben sich relativ zueinander in eine Freigabestellung bewegen, bei der die Verbindung zwischen Medienzufuhr und Verbraucher hergestellt ist, und einer Lastsenkenstellung die beiden Kolben derart einen vorgebbaren Abstand zueinander einnehmen, dass die Verbindung zwischen Medienabfuhr und Verbraucher hergestellt ist.

Im Hinblick auf diese Problematik liegt der Erfindung die Aufgabe zugrunde, ein Lasthalteventil zur Verfügung zu stellen, bei dem die Gefahr von Fehlbedienungen und dadurch verursachter Fehlfunktionen minimiert ist.

Erfindungsgemäß ist diese Aufgabe durch ein Lasthalteventil gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass eine Überwachungseinrichtung vorhanden ist, die die einzelnen Schaltstellungen der Kolben des Ventils feststellt, um eine sichere Funktion des Lasthalteventils zu gewährleisten. Dadurch, dass der Bedienungsperson und/oder einer automatisch arbeitenden Maschinensteuerung (SPS) eine Information über den jeweiligen Schaltzustand zur Verfügung steht, gestaltet sich der Bedienvorgang einfach und übersichtlich, so dass die Gefahr von Fehlbedienungen wesentlich verringert ist.

Mit besonderem Vorteil kann die Überwachungseinrichtung in der Weise ausgebildet sein, dass der Hauptsteuerkolben und/oder der Rückschlagkolben mit einer Signaleinrichtung zusammenwirken, die induktiv ein von einer Messeinrichtung erzeugtes Feld ändert, sobald die Position der Signaleinrichtung, bedingt durch die Bewegung des Hauptkolbens und/oder des Rückschlagkolbens, sich relativ gegenüber der Messeinrichtung ändert.

In besonders vorteilhafter Weise ist als Überwachungseinrichtung eine Art induktiver Wegmesseinrichtung vorgesehen, bei der die Signaleinrichtung aus einem mit dem Hauptkolben verbundenen Steuerteil besteht, das zumindest teilweise magnetfeldverändernde Bestandteile, insbesondere in Form von Eisenverbindungen, aufweist, wobei die Messeinrichtung mindestens eine bestrombare Wicklungsspule aufweist, die das Magnetfeld erzeugt. Eine derartige induktive Messeinrichtung ist ohne Schwierigkeiten in das Ventilgehäuse integrierbar oder als Zusatzgehäuse an ein Ende des Ventilgehäuses anbaubar, aus dem heraus sich das Steuerteil in das Zusatzgehäuse erstreckt.

In vorteilhafter Weise ist das Steuerteil Bestandteil einer Signalstange, die mit ihrem einen freien Ende am Hauptsteuerkolben angreift und im Bereich ihres anderen freien Endes eine Doppelspulenanordnung durchgreift, deren Einzelspulen mit einem vorgebbaren Abstand entlang der Verfahrrichtung der Signalstange hintereinander angeordnet sind. Bei einer derartigen Anordnung können die Einzelspulen Bestandteil einer induktiven Halbbrücke sein, für eine Wegmessung nach dem sog. LVDT-System (Linear Voltage Differential Transformer). Alternativ oder zusätzlich erfolgt die Programmierung oder Auslegung unter Einbezug definierter Schaltpunkte, in der Art eines Kipp-Oszillators (Schmitt-Trigger). Insoweit sind dann nur zwei, einfach zu überwachende Schaltpunkte notwendig. Eine weitere Möglichkeit der Überwachung besteht in der Verwendung marktüblicher Hall-Sensoren.

Die Anordnung kann mit Vorteil so getroffen sein, dass bezogen auf das Ventilgehäuse eine Nullpunkt- oder Ausgangslage für die Messeinrichtung kalibriert ist, bei deren Verlassen in der einen oder anderen Richtung durch den Hauptsteuerkolben, ausgehend von einer vorgebbaren Ausgangsspannung, sich in der Art einer Schaltpunktfeststellung auf die jeweilige Schaltstellung des Ventils rückschließen lässt.

Vorzugsweise ist die jeweilige Schaltpunktfeststellung für die eindeutige Erfassung der jeweiligen Schaltstellung mit einer Art Hystereseverlauf versehen.

Mit besonderem Vorteil kann die Messeinrichtung an einer Auswerteelektronik angeschlossen sein, die bevorzugt über eine LED-Anzeige der Bedienungsperson eine optische Anzeige der Schaltstellungen liefert. Mit einer elektronischen Überwachung ist eine Erhöhung des Diagnose-Deckungsgrades (DC) gemäß DIN EN ISO 13849 erreicht. Hierdurch ist ein höherer Performancelevel (PL) erreichbar sowie eine höhere funktionale Sicherheit.

Bei besonders vorteilhaften Ausführungsbeispielen weist das Ventilgehäuse zur Bildung der Nullpunkt- oder Ausgangslage eine Anschlagschulter auf, an der der Rückschlagkolben in der Lasthaltenstellung in Anlage ist, wobei in der Lastheben- oder Lastsenkenstellung der Hauptsteuerkolben sich von einer an die Anschlagschulter angenäherten Position in Richtung auf einen stirnseitigen Gehäuseanschluss als dem hydraulischen Verbraucheranschluss nach vorn bzw. von diesem rückwärts wegbewegt.

Bei vorteilhaften Ausführungsbeispielen wirkt zumindest in einer Position des Hauptsteuerkolbens auf diesen neben einer Hauptfeder mit vorzugsweise einstellbarer Federkraft noch ein angedrosselter Fluiddruck, insbesondere beim Senkenvorgang, ein.

Als Steuerventileinrichtung zur Ansteuerung des Lasthalteventils für die Medienzu- oder -abfuhr ist dieses vorteilhafterweise an ein Steuerventil, insbesondere in Form eines 4/3-Proportional-Wegeventils angeschlossen. Unter Lasthalteventilen sollen auch gattungsgemäß alle Arten von Senkbremsventilen und alle Arten von entsperrbaren Rückschlagventilen erfasst und mit einbezogen sein.

Nachstehend ist die Erfindung anhand eines in der Zeichnung dargestellten Ausführungsbeispiels im Einzelnen erläutert. Es zeigen:
- Fig. 1: eine Symboldarstellung der Schaltung eines Hydrauliksystems zur Versorgung eines Verbrauchers in Form eines Arbeitszylinders, mit einem Lasthalteventil gemäß einem Ausführungsbeispiel der Erfindung;
- Fig. 2: einen Längsschnitt des Ausführungsbeispiels des Lasthalteventils;
- Fig. 3: einen abgebrochen und gegenüber Fig. 2 vergrößert dargestellten Längsschnitt lediglich des an einen stirnseitigen Gehäuseanschluss angrenzenden Teils des Ausführungsbeispiels;
- Fig. 4: einen gegenüber Fig. 3 weiter vergrößert gezeichneten Teillängsschnitt lediglich des dem stirnseitigen Verbraucheranschluss näher gelegenen Abschnitts des Ausführungsbeispiels, wobei die Schaltstellung "Lasthalten" dargestellt ist; und
- Fig. 5 und 6: der Fig. 4 entsprechende Darstellungen, wobei die Schaltstellungen "Lastheben" bzw. "Lastsenken" dargestellt sind.

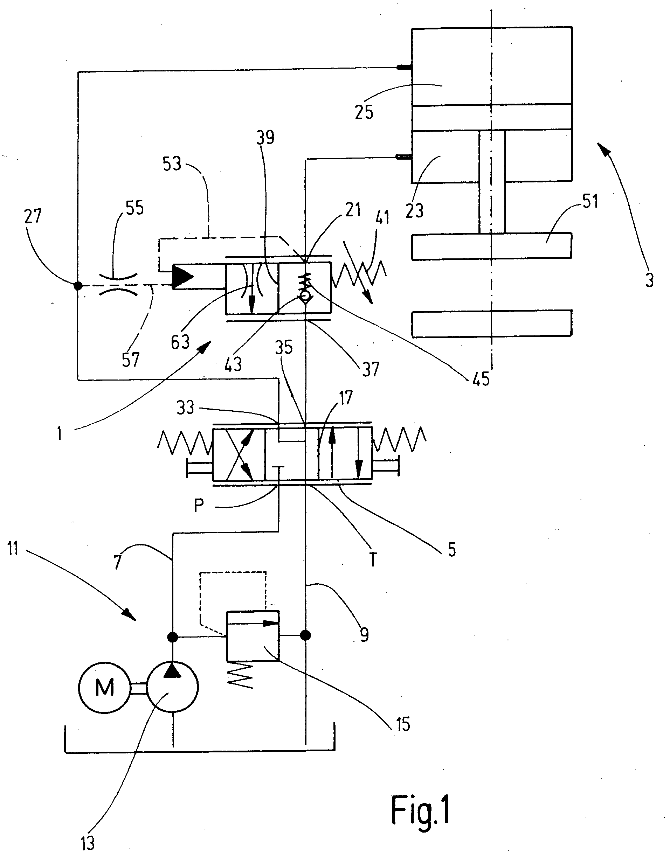

Wie der Schaltungsdarstellung von Fig. 1 entnehmbar ist, ist das nachstehend näher beschriebene Ausführungsbeispiel des erfindungsgemäßen Lasthalteventils 1 zur Betriebssteuerung eines doppeltwirkenden Arbeitszylinders 3 vorgesehen. Für die Ansteuerung des Lasthalteventils 1 ist ein Steuerventil in Form eines Proportional-4/3-Wegeventils 5 vorgesehen. Dieses ist mit seinem Druckanschluss P und seinem Tankanschluss T mit einer Druckleitung 7 bzw. Tankleitung 9 einer Versorgungseinheit 11 verbunden. Die an der Druckseite einer motorisch angetriebenen Hydropumpe 13 angeschlossene Druckleitung 7 ist über ein Druckbegrenzungsventil 15 zur Tankleitung 9 hin abgesichert.

Das 4/3-Wegeventil 5 ist in die in Fig. 1 gezeigte Stellung federvorgespannt, die der Schaltstellung "Lasthalten" des Lasthalteventils 1 entspricht. Aus dieser Ventilstellung ist das 4/3-Wegeventil 5 durch manuelles Ansteuern seines Ventilkolbens 17 nach rechts (bezogen auf Fig. 1) in die Ventilstellung bewegbar, die der Schaltstellung "Lastheben" des Lasthalteventils 1 entspricht, und durch Verschieben nach links in die Ventilstellung bringbar, die der Schaltstellung "Lastsenken" des Lasthalteventils 1 entspricht.

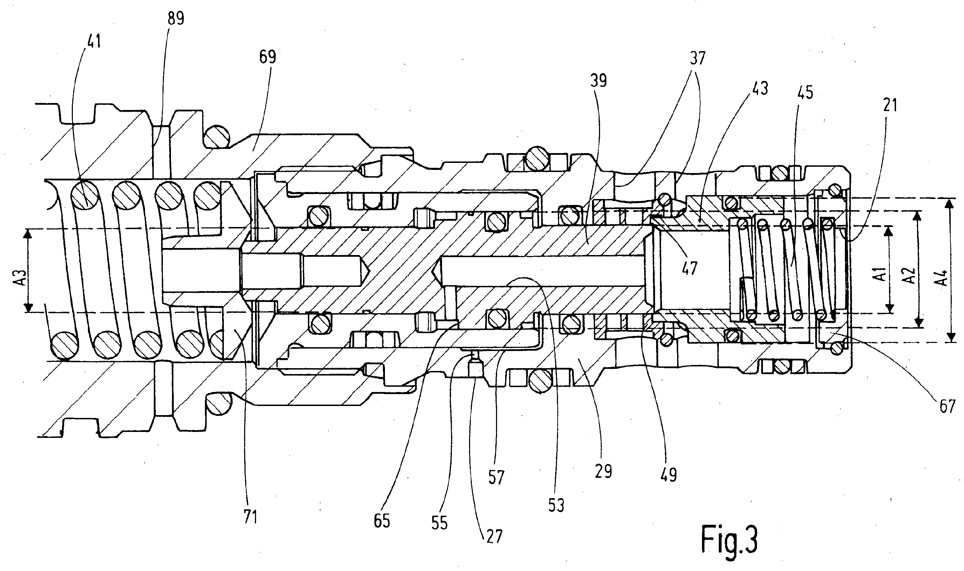

Das Lasthalteventil 1 ist mit einem Verbraucheranschluss 21 mit der Stangenseite 23 des Arbeitszylinders 3 in Verbindung, dessen Kolbenseite 25 mit einer Anschlussstelle 27 in Verbindung ist, die sich, wie insbesondere den Fig. 3 bis 6 entnehmbar ist, am Ventilgehäuse 29 des Lasthalteventils 1 befindet. Die Anschlussstelle 27 ist weiterhin mit einem Anschluss 33 für Medienzufuhr oder -abfuhr am Wegeventil 5 in Verbindung, dessen weiterer Ventilanschluss 35 für Medienzufuhr oder Medienabfuhr mit einem Gehäuseanschluss 37 des Lasthalteventils 1 verbunden ist. Dessen Hauptkolben 39 ist durch eine auf ihn einwirkende, von der Federkraft her einstellbare Hauptfeder 41 in die in Fig. 1, 3 und 4 gezeigte Schaltstellung "Lasthalten" vorgespannt, wobei ein Rückschlagkolben 43 durch eine Rückschlagkolbenfeder 45 in Richtung einer Sperrstellung gehalten ist, bei der der Durchgang zwischen Verbraucheranschluss 21 und Gehäuseanschluss 37 gesperrt ist.

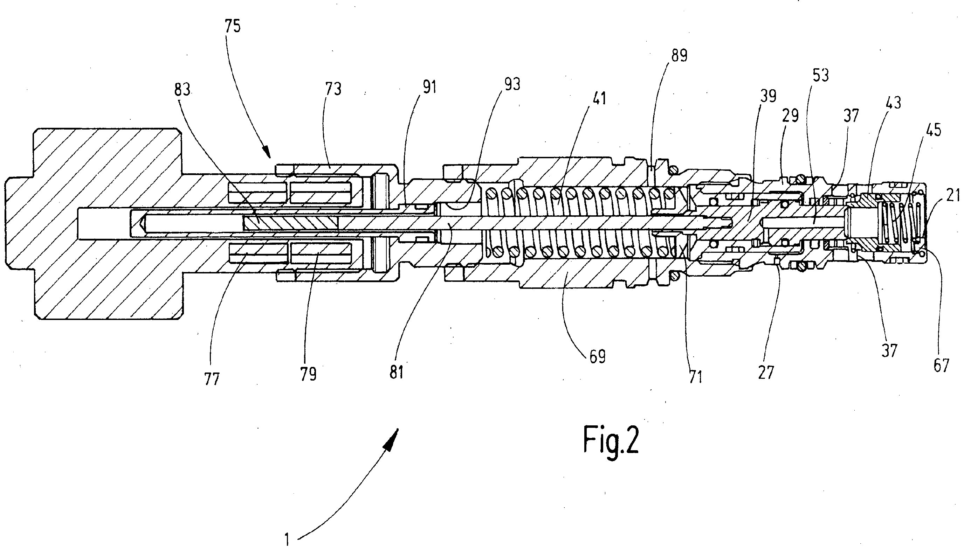

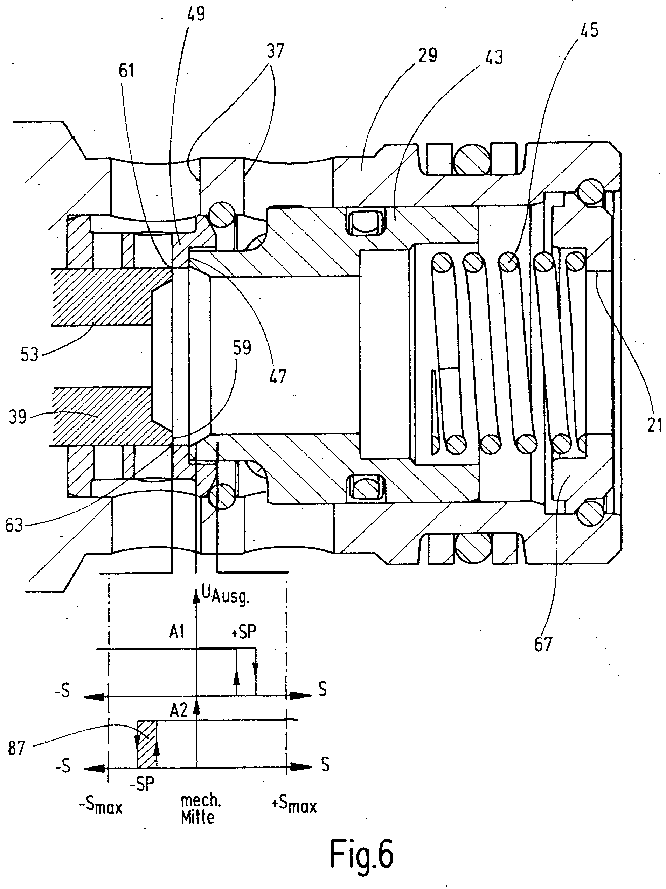

Die Fig. 2 bis 6 zeigen Einzelheiten des Aufbaus des Lasthalteventils 1 mit darin axial bewegbarem Hauptkolben 39 und Rückschlagkolben 43. Der Hauptkolben 39 ist durch die Hauptfeder 41 der Zeichnung nach rechts in Richtung auf das offene Ende des Ventilgehäuses 29 vorgespannt, das den Verbraucheranschluss 21 bildet. Der Rückschlagkolben 43 ist durch die Rückschlagkolbenfeder 45 für eine Bewegung in Richtung vom Verbraucheranschluss 21 weg vorgespannt und liegt bei der Haltenstellung (Fig. 1, 3 und 4) sowie der Senkenstellung (Fig. 6) an einer Anschlagschulter 47 an, die an einem Gehäuseeinsatz 49 gebildet ist. Wie am deutlichsten aus

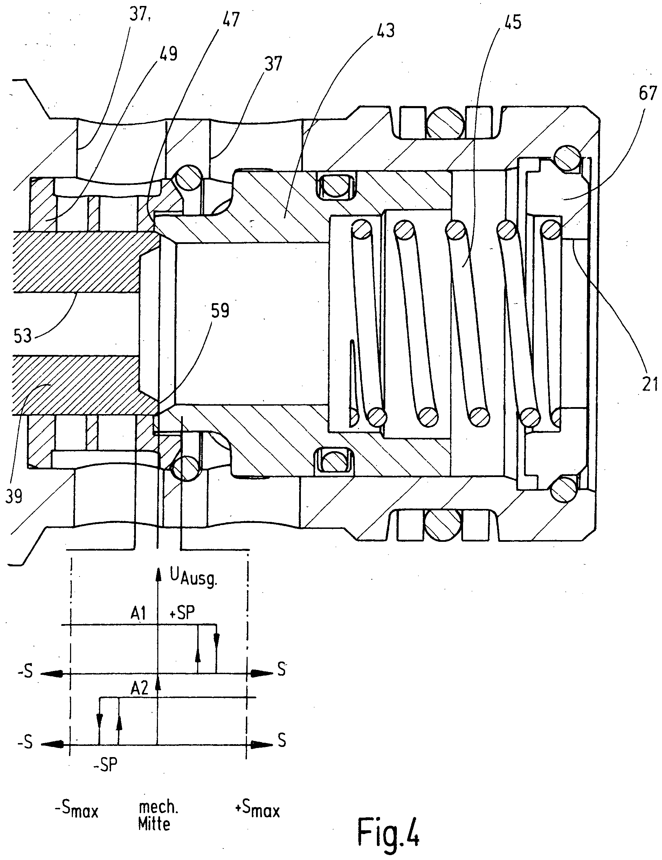

Fig. 4 zu ersehen ist, liegt der Hauptkolben 39 bei der Haltenstellung am Ende des Rückschlagkolbens 43 an, nachdem er geringfügig die Anschlagschulter 47 überlaufen hat. Bei diesen Kolbenstellungen ist durch den Rückschlagkolben 43 die Verbindung zwischen dem Verbraucheranschluss 21 und dem Gehäuseanschluss 37 gesperrt, der aus zwei in Längsrichtung des Ventilgehäuses 29 hintereinander angeordneten Bohrungsreihen im Ventilgehäuse 29 besteht, während die Anschlussstelle 27 und damit die Kolbenseite 25 des Arbeitszylinders 3 über den Ventilanschluss 33 (Fig. 1) des Wegeventils 5 mit dem Tankanschluss T verbunden ist.

Für den Übergang aus der Haltenstellung in die Hebenstellung oder die Senkenstellung wird der Ventilkolben 17 des 4/3-Wegeventils 5 verschoben, bei Übergang zur Hebenstellung in Fig. 1 gesehen nach rechts. Das Ventil 5 verbindet daher den Druckanschluss P mit dem Gehäuseanschluss 37 des Lasthalteventils 1, während die Anschlussstelle 27, die mit der Kolbenseite 25 des Arbeitszylinders 3 verbunden ist, zum Tankanschluss T hin freigegeben wird. Der am Gehäuseanschluss 37 anstehende Druck öffnet die Verbindung zum Verbraucheranschluss 21, indem der Rückschlagkolben 43 gegen die Kraft der Feder 45 verschoben wird, so dass durch Druckaufbau in der Stangenseite 23 des Arbeitszylinders 3 die Last 51 gehoben wird. Gleichzeitig wirkt ein dem Lastdruck der Stangenseite 23 des Arbeitszylinders 3 entsprechender Steuerdruck vom Verbraucheranschluss 21 her über eine Steuerleitung 53 auf den Hauptkolben 39 ein. Von der Kolbenseite 25 beim Hebevorgang abströmendes Medium gelangt über die Anschlussstelle 27 und den Ventilanschluss 33 des Wegeventils 5 zum Tankanschluss T.

Wird das Wegeventil 5 aus der Hebenstellung in die in Fig. 1 gezeigte Haltestellung zurückbewegt, ist der Verbraucheranschluss 21 durch den Rückschlagkolben 43 gesperrt und die Kolbenseite 25 des Arbeitszylinders 3 verbleibt über die Anschlussstelle 27 und den Ventilanschluss 33 des Wegeventils 5 mit dem Tankanschluss T in Verbindung.

Wird für die Schaltstellung "Lastsenken" der Ventilkolben 17 des Wegeventils 5 aus der Hebenstellung in Fig. 1 gesehen nach links bewegt, kommt der Druckanschluss P über den Ventilanschluss 33 und die Anschlussstelle 27 mit der Kolbenseite 25 des Arbeitszylinders 3 in Verbindung. Für die Medienabfuhr auf der Stangenseite 23 über den Verbraucheranschluss 21 erfolgt eine Bewegung des Hauptkolbens 39 gegen die Kraft der Hauptfeder 41 in eine in Fig. 6 gezeigte Position, weil der vom Ventilanschluss 33 des Wegeventils 5 gelieferte Mediendruck über die Anschlussstelle 27 sowie über eine Drossel 55 in einer weiteren Steuerleitung 57 (in Fig. 3 als Steuer-Fluidraum ausgebildet) auf den Hauptkolben 39 einwirkt. Bei dieser Position bildet der Hauptkolben 39, wie der Fig. 6 entnehmbar ist, zwischen seinem Endrand 59 und einer Kante 61 eine Drosselstelle mit variablem Steuerquerschnitt aus, die in Fig. 1 und 6 mit 63 bezeichnet ist und über die beim Senkenvorgang der Medienabfluss kontrolliert vom Verbraucheranschluss 21 zum Gehäuseanschluss 37 erfolgt. Wie am deutlichsten aus Fig. 3 zu ersehen ist, wirkt beim Hebenvorgang vom Verbraucheranschluss 21 her über die Steuerleitung 53 auf den Hauptkolben 39 auch ein Steuerdruck ein, der am Hauptkolben 39 gleichsinnig wie die Hauptfeder 41 wirkt. Die Steuerleitung 53 ist durch eine Axialbohrung im Hauptkolben 39 gebildet, die zu einer durch einen Kolbenabsatz gebildeten Ringfläche 65 führt. Der am Verbraucheranschluss 21 anstehende Druck wirkt zudem entgegen der Feder 41 auf den Hauptkolben 39 ein. Die Resultierende wirkt als Kraft gegen die Feder 41. Ferner ist eine Druckbegrenzungsfunktion realisiert, bei der das Ventil 1 auf Durchlass-Stellung gebracht ist.

Die am Rückschlagkolben 43 und am Hauptkolben 39 wirksamen Druckflächen sind in Fig. 3 mit A1 bis A4 kenntlich gemacht. Beim Lasthebenvorgang öffnet der Pumpendruck am Gehäuseanschluss 37 den als Hohlkolben ausgebildeten Rückschlagkolben 43 über die Ringfläche A4-A1 gegen die Rückschlagkolbenfeder 45, die zwischen dem Rückschlagkolben 43 und einem Haltering 67 am offenen Ende des Gehäuses 29 eingespannt ist. Beim Vorgang Lasthalten wirkt der Lastdruck am Verbraucheranschluss 21 auf die resultierende Fläche A1-(A2-A3) gegen die Vorspannkraft der Hauptfeder 41. Beim Lastsenkenvorgang wirkt der an der Anschlussstelle 27 herrschende Ansteuerdruck auf die Ringfläche A2-A1 und öffnet zusammen mit dem Lastdruck am Verbraucheranschluss 21 den Hauptkolben 39 gegen die Vorspannkraft der Hauptfeder 41.

Entgegengesetzt zu dem den Verbraucheranschluss 21 bildenden offenen Ende des Ventilgehäuses 29 schließt sich ein Federgehäuse 69 für die Hauptfeder 41 an. Diese stützt sich mit einem Ende über einen Federteller 71 am zugekehrten Ende des Hauptkolbens 39 ab. Das andere Ende der Hauptfeder 41 stützt sich am in das Federgehäuse 69 eingeschraubten Ende eines Messgehäuses 73 ab, in dem wiederum ein Endabschnitt einer Überwachungseinrichtung 75 aufgenommen ist. Diese bildet beispielsweise eine Einrichtung zur induktiven Wegmessung nach dem bekannten LVDT-System (Linear Voltage Differential Transformer) und weist zwei bestrombare, magnetfeld-erzeugende Wicklungsspulen 77 und 79 auf. Als Bestandteile einer induktiven Halbbrücke wirken die Wicklungsspulen 77, 79 mit einer Signaleinrichtung in Form eines stangenartigen Steuerteils 81 zusammen, das mit einem Ende mit dem Hauptkolben 39 verbunden und mit diesem axial verfahrbar ist und am anderen Ende einen als Spulenkern innerhalb der Wicklungsspulen 77, 79 bewegbaren Endabschnitt 83 aus einem hoch permeablen Ferritmaterial aufweist.

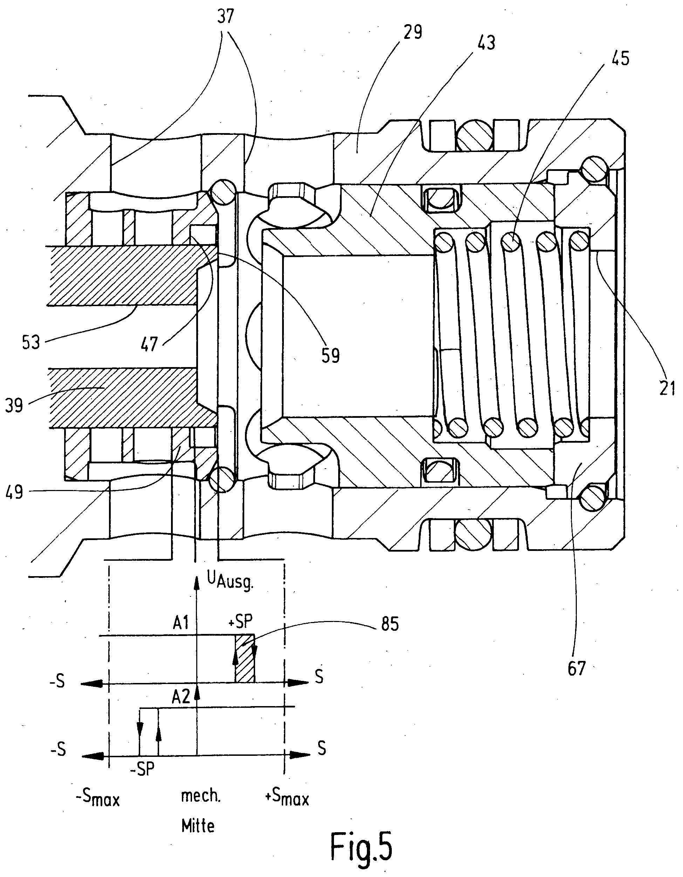

Durch den Bewegungen des Hauptkolbens 39 entsprechende Axialbewegungen des Endabschnitts 83 bewirkte Veränderungen der Induktivität der Wicklungsspulen 77, 79 und der dadurch resultierenden Änderungen der Brückenspannung U_{Ausg}. erfolgt mittels einer dem Stand der Technik entsprechenden Auswerteelektronik die Feststellung über die jeweiligen Schaltstellungen des Lasthalteventils 1, bezogen auf eine Nullpunkt- oder Ausgangslage. Diese Ausgangslage ist, wie in Fig. 4 bis 6 diagrammartig angedeutet und als mechanische Mitte bezeichnet ist, derart kalibriert, dass sie der Position des Endrandes 59 des Hauptkolbens 39 bei der Schaltstellung "Lasthalten" entspricht. Bei einer Brückenschaltung kann dieser Position eine Ausgangsspannung "High" entsprechen und zwar auf beiden Ausgängen A1 und A2. Beim Übergang zu "Lastheben" bewegt sich der Hauptkolben 39 eine Wegstrecke S in Fig. 5 nach rechts, wodurch eine Ausgangsspannung entsteht.

Für die eindeutige Schaltpunktfeststellung wird ein Hysteresebereich 85 berücksichtigt, der sich über einen geringen Wegstreckenabschnitt erstreckt. Entsprechendes gilt für den in Fig. 6 gezeigten Zustand "Lastsenken" mit entsprechender Bewegung des Steuerkolbens 39 aus der mechanischen Mitte nach links. Die entsprechende, kennzeichnende Ausgangsspannung
wird wiederum über einen Hysteresebereich 87 über einen geringen Wegstreckenabschnitt zur Schaltpunktfeststellung benutzt.

Insgesamt ergeben sich bei zwei Schaltkanälen folgende Zustände gemäß nachfolgender Tabelle:

| | Kanäle | |
|---|---|---|
| | A1 | A2 |
| Mittel- oder Neutralstellung | high | high |
| Heben | low | high |
| Senken | high | low |

Wie Fig. 2 und 3 zeigen, ist am Federgehäuse 69 eine Entlüftungsbohrung 89 gebildet. Das stangenartige Steuerteil 81 ist an dem in die Überwachungseinrichtung 75 ragenden Endabschnitt in einer Führungshülse 91 geführt, die im Messgehäuse 73 in der der Hauptfeder 41 zugewandten Bohrung 93 gehalten ist.

## Patentansprüche

1. Lasthalteventil (1) mit mindestens einem in einem ein- oder mehrteiligen Ventilgehäuse (29) längsverfahrbar geführten Hauptsteuerkolben (39) und einem Rückschlagkolben (43), wobei in Schaltstellungen in Form
- einer Lasthaltestellung mittels der beiden Kolben (39, 43) eine fluidführende Verbindung zwischen mindestens zwei Anschlussstellen (37, 21) gesperrt ist, von denen eine (37) der Medienzufuhr oder -abfuhr dient und von denen die andere (21) zu einem hydraulischen Verbraucher (3) führt,
- einer Lasthebenstellung die beiden Kolben (35, 43) sich relativ zueinander in eine Freigabestellung bewegen, bei der die Verbindung zwischen Medienzufuhr (37) und Verbraucher (3) hergestellt ist, und
- einer Lastsenkenstellung die beiden Kolben (39, 43) derart einen vorgebbaren Abstand zueinander einnehmen, dass die Verbindung zwischen Medienabfuhr (37) und Verbraucher (3) hergestellt ist,
**dadurch gekennzeichnet, dass** eine Überwachungseinrichtung (75) vorhanden ist, die die einzelnen Schaltstellungen der genannten Kolben (39, 43) feststellt, um eine sichere Funktion des Lasthalteventils (1) zu gewährleisten.

2. Lasthalteventil nach Anspruch 1, **dadurch gekennzeichnet, dass** der Hauptsteuerkolben (39) und/oder der Rückschlagkolben (43) mit einer Signaleinrichtung (81, 83) zusammenwirkt, die induktiv ein von einer Messeinrichtung (77, 79) erzeugtes Feld ändert, sobald die Position der Signaleinrichtung (81, 83), bedingt durch die Bewegung des Hauptkolbens (39) und/oder des Rückschlagkolbens (43), sich relativ gegenüber der Messeinrichtung (77, 79) ändert.

3. Lasthalteventil nach Anspruch 1 oder 2, **dadurch gekennzeichnet, dass** die Signaleinrichtung aus einem mit dem Hauptkolben (39) verbundenen Steuerteil (81, 83) besteht, das zumindest teilweise magnetfeldverändernde Bestandteile (83), insbesondere in Form von Eisenverbindungen aufweist, und dass die Messeinrichtung mindestens eine bestrombare Wicklungsspule (77, 79) aufweist, die das Magnetfeld erzeugt.

4. Lasthalteventil nach Anspruch 3, **dadurch gekennzeichnet, dass** das Steuerteil (83) Bestandteil einer Signalstange (81) ist, die mit ihrem einen freien Ende am Hauptsteuerkolben (39) angreift und im Bereich ihres anderen freien Endes eine Doppelspulenanordnung durchgreift, deren Einzelspulen (77, 79) mit einem vorgebbaren Abstand entlang der Verfahrrichtung der Signalstange (81) hintereinander angeordnet sind.

5. Lasthalteventil nach einem der vorstehenden Ansprüche, **dadurch gekennzeichnet, dass** bezogen auf das Ventilgehäuse (29) eine Nullpunkt- oder Ausgangslage für die Messeinrichtung (77, 79) kalibriert ist, bei deren Verlassen in der einen oder anderen Richtung durch den Hauptsteuerkolben (39), ausgehend von einer vorgebbaren Ausgangsspannung, sich in der Art einer Schaltpunktfeststellung auf die jeweilige Schaltstellung des Ventils (1) rückschließen lässt.

6. Lasthalteventil nach Anspruch 5 **dadurch gekennzeichnet, dass** die jeweilige Schaltpunktfeststellung für die eindeutige Erfassung der jeweiligen Schaltstellung mit einer Art Hystereseverlauf (85, 87) versehen ist.

7. Lasthalteventil nach einem der vorstehenden Ansprüche, **dadurch gekennzeichnet, dass** die Messeinrichtung (77, 79) an einer Auswerteelektronik angeschlossen ist, die bevorzugt über eine LED-Anzeige eine optische Anzeige der Schaltstellungen liefert.

8. Lasthalteventil nach einem der vorstehenden Ansprüche, **dadurch gekennzeichnet, dass** zur Bildung der Nullpunkt- oder Ausgangslage das Ventilgehäuse (29) eine Anschlagschulter (47) aufweist, an der der Rückschlagkolben (43) in der Lasthaltenstellung in Anlage ist, und dass in der Lastheben- oder Lastsenkenstellung der Hauptsteuerkolben (39) sich von einer an die Anschlagschulter (47) angenäherten Position in Richtung auf einen stirnseitigen Gehäuseanschluss als dem hydraulischen Verbraucheranschluss (21) nach vorn bzw. von diesem rückwärts wegbewegt.

9. Lasthalteventil nach einem der vorstehenden Ansprüche, **dadurch gekennzeichnet, dass** zumindest in einer Position des Hauptsteuerkolbens (39) auf diesen neben einer Hauptfeder (41) mit vorzugsweise einstellbarer Federkraft noch ein angedrosselter Fluiddruck (57) insbesondere beim Senkenvorgang einwirkt sowie ein Steuerdruck (53), der vom Gehäuseanschluss (21) des hydraulischen Verbrauchers (3) angesteuert ist.

10. Lasthalteventil nach einem der vorstehenden Ansprüche, **dadurch gekennzeichnet, dass** für dessen Ansteuerung für die Medienzu- oder -abfuhr dieses an ein Steuerventil, insbesondere in Form eines 4/3-Proportional-Wegeventils (5) anschließbar ist.

11. Lasthalteventil nach einem der vorstehenden Ansprüche, **dadurch gekennzeichnet, dass** zumindest in einer Position des Hauptsteuerkolbens auf diesen neben einer Hauptfeder (41) mit vorzugsweise einstellbarer Federkraft noch ein angedrosselter Fluiddruck (57), insbesondere beim Senkenvorgang, am hydraulischen Verbraucher (3, 23) einwirkt sowie beim Senkenvorgang desselben ein Steuerdruck (53), der von der einen anderen Anschlussstelle (21) des hydraulischen Verbrauchers angesteuert ist.

## Claims

1. A load holding valve (1) that has at least one main control piston (39) which is guided such that it can be displaced longitudinally in a single- or multiple-piece valve housing (29) and a non-return piston (43), in switching positions in the form of
- a load-holding position - a fluid-conducting connection between at least two connection points (37, 21) being shut off by means of the two pistons (38, 43), of which connection points one (37) serves to supply or return media, and the other (21) leads to a hydraulic consumer (3),
- a load-lifting position - the two pistons (35, 43) move relative to one another into a release position in which the connection between the media supply (37) and the consumer (3) is established, and
- a load-lowering position - the two pistons (39, 43) assume a pre-definable spacing from one another in such a way that the connection between the media return (37) and the consumer (3) is established,
**characterised in that** a monitoring device (75) is provided which detects the individual switching positions of said pistons (39, 43) in order to guarantee reliable function of the load holding valve (1).

2. The load holding valve according to Claim 1, **characterised in that** the main control piston (39) and/or the non-return piston (43) interact with a signalling device (81, 83) which inductively alters a field generated by a measuring device (77, 79) as soon as the position of the signalling device (81, 83) changes in relation to the measuring device (77, 79) due to the movement of the main piston (39) and/or of the non-return piston (43).

3. The load holding valve according to Claim 1 or 2, **characterised in that** the signalling device consists of a control unit (81, 83) connected to the main piston (39), which control unit has at least partially magnetic field altering components (83), in particular in the form of iron compounds, and that the measuring device has at least one energisable winding coil (77, 79) that generates the magnetic field.

4. The load holding valve according to Claim 3, **characterised in that** the control unit (83) is a component part of a signal rod (81), the one free end of which engages with the main control piston (39), and in the area of its other free end extends through a dual coil arrangement, the individual coils (77, 79) of which are arranged in series with predetermined spacing along the direction of travel of the signal rod (81).

5. The load holding valve according to any of the preceding claims, **characterised in that** a zero point or starting position for the measuring device (77, 79) is calibrated relative to the valve housing (29) which, when departed from in one direction or another due to the main control piston (39), starting from a predetermined output voltage, the respective switching position of the valve (1) is able to be inferred in the manner of switching point detection.

6. The load holding valve according to Claim 5, **characterised in that** the respective switching point determination for the unambiguous detection of the respective switching position is provided with a kind of hysteresis loop (85, 87).

7. The load holding valve according to any of the preceding claims, **characterised in that** the measuring device (77, 79) can be connected to evaluation electronics, preferably providing a visual indication of the switching positions on an LED display.

8. The load holding valve according to any of the preceding claims, **characterised in that** the valve housing (29) has a stop shoulder (47) for forming the zero point or starting position, against which stop shoulder the non-return piston (43) abuts in the load holding position, and **in that** in the load lifting or load lowering position the main control piston (39) moves forward or backward from a position close to the stop shoulder (47) towards a frontal housing port as the hydraulic consumer port (21).

9. The load holding valve according to any of the preceding claims, **characterised in that** in at least one position of the main control piston (39) a throttled fluid pressure (57), in addition to a main spring (41) with a preferably adjustable spring force, acts on said main control piston, especially during lowering movements, as well as a control pressure (53) which is controlled by the housing port (21) of the hydraulic consumer (3).

10. The load holding valve according to any of the preceding claims, **characterised in that** for controlling the load holding valve for the media supply or return, said load holding valve can be connected to a control valve, in particular in the form of a 4/3 proportional directional valve (5).

11. The load holding valve according to any of the preceding claims, **characterised in that** at least in one position of the main control piston, a throttled fluid pressure (57), in addition to a main spring (41) that has a preferably adjustable spring force, acts on said hydraulic consumer (3, 23), in particular during lowering operations, as well as a control pressure (53) during lowering operations, which is controlled by another connection point (21) of the hydraulic consumer.

## Revendications

1. Vanne (1) de maintien de charge, comprenant au moins un piston (39) de commande principal, guidé et déplaçable longitudinalement, dans un corps (29) de vanne, en une partie ou en plusieurs parties et un piston (43) de retour, dans lequel, dans des positions de commutation sous la forme
- d'une position de maintien de charge, au moyen des deux pistons (39, 43), une liaison fluidique entre au moins deux points (37, 21) de raccord est obturée, dont l'un (37) sert à l'arrivée ou à l'évacuation de fluide et dont l'autre (21) conduit à un consommateur (3) hydraulique,
- d'une position de levage de charge, les deux pistons (35, 43) se déplacent l'un par rapport à l'autre dans une position de dégagement, dans laquelle la liaison entre l'arrivée (37) de fluide et le consommateur (3) est ménagée et
- d'une position d'abaissement de charge, les deux pistons (39, 43) prennent, l'un par rapport à l'autre, une distance pouvant être donnée à l'avance, de manière à ménager la liaison entre l'évacuation (37) de fluide et le consommateur (3),
**caractérisé en ce qu'**il y a un dispositif (75) de contrôle, qui fixe les diverses positions de commutation des pistons (39, 43) mentionnés, pour assurer un fonctionnement sécurisé de la vanne de maintien de charge.

2. Vanne de maintien de charge suivant la revendication 1, **caractérisée en ce que** le piston (39) de commande principal et/ou le piston (43) de retour coopèrent avec un dispositif (81, 83) de signalisation, qui modifie par induction un champ produit par un dispositif (77, 79) de mesure dès que la position du dispositif (81, 83) de signalisation, en raison du déplacement du piston (39) principal et/ou du piston (43) de retour, se modifie par rapport au dispositif (77, 79) de mesure.

3. Vanne de maintien de charge suivant la revendication 1 ou 2, **caractérisée en ce que** le dispositif de signalisation est constitué d'une partie (81, 83) de commande, qui est relié au piston (39) de commande principal et qui a des constituants (83) modifiant le champ magnétique au moins en partie, sous la forme de composés de fer et **en ce que** le dispositif de mesure a au moins une bobine (77, 79) à enroulement pouvant être alimentée en courant et produisant le champ magnétique.

4. Vanne de maintien de charge suivant la revendication 3, **caractérisée en ce que** la partie (83) de commande fait partie d'une barre (81) de signalisation, qui attaque, par son extrémité libre, le piston (39) de commande principal et qui traverse, dans la partie de son autre extrémité libre, un agencement à double bobines, dont les bobines (77, 79) individuelles sont disposées l'une derrière l'autre à une distance pouvant être donnée à l'avance, le long de la direction de déplacement de la barre (81) de signalisation.

5. Vanne de maintien de charge suivant l'une des revendications précédentes, **caractérisée en ce qu'**il est étalonné, par rapport au corps (29) de la vanne, une position de point zéro ou une position initiale du dispositif (77, 79) de mesure, qui, lorsqu'elle est quittée dans un sens ou dans l'autre, peut être ramenée par le piston (39) de commande principal, à partir d'une tension initiale pouvant être donnée à l'avance, à la façon d'une fixation de point de commutation au point de commutation respectif de la vanne (1).

6. Vanne de maintien de charge suivant la revendication 5, **caractérisée en ce que** la fixation du point de commutation est pourvue, pour la détection univoque du point de commutation, d'une sorte de courbe (85, 87) d'hystérésis.

7. Vanne de maintien de charge suivant l'une des revendications précédentes, **caractérisée en ce que** le dispositif (77, 79) de mesure est raccordé à une électronique d'exploitation, qui fournit, de préférence par un affichage à LED, un affichage optique des positions de commutation.

8. Vanne de maintien de charge suivant l'une des revendications précédentes, **caractérisée en ce que**, pour former la position de point zéro ou initiale, le corps (29) de la vanne a un épaulement (47) de butée sur lequel le piston (43) de retour est en contact dans la position de maintien de charge et **en ce que**, dans la position de levage de charge ou d'abaissement de charge, le piston (39) principal de commande se déplace, à partir d'une position rapprochée de l'épaulement (47) de butée, dans la direction d'un raccord du corps du côté frontal, sous la forme du raccord (21) hydraulique de consommateur, en s'éloignant vers l'avant ou en en revenant.

9. Vanne de maintien de charge suivant l'une des revendications précédentes, **caractérisée en ce que**, au moins dans une position du piston (39) de commande principal, agit sur celui-ci, outre un ressort (41) principal ayant une force élastique, de préférence réglable, une pression (57) de fluide étranglée, notamment lors de l'opération d'abaissement, ainsi qu'une pression (53) de commande, qui est commandée par le raccord (21) de corps du consommateur (3) hydraulique.

10. Vanne de maintien de charge suivant l'une des revendications précédentes, **caractérisée en ce qu'**elle peut être raccordée pour sa commande, pour l'arrivée ou l'évacuation de fluide, à une soupape de commande, notamment sous la forme d'une soupape (5) proportionnelle à 4/3 voies.

11. Vanne de maintien de charge suivant l'une des revendications précédentes, **caractérisée en ce qu'**au moins dans une position du piston de commande principal, agit sur celui-ci, outre un ressort (41) principal ayant une force élastique, de préférence réglable, encore une pression (57) de fluide étranglée, notamment lors de l'opération d'abaissement, sur le consommateur (3, 23) hydraulique, ainsi que, lors de l'opération de son abaissement, une pression (53) de commande, qui est commandée par l'autre point (21) de raccord du consommateur hydraulique.
